# EUROPEAN PATENT SPECIFICATION

(11) **EP 2 982 439 B1**
(45) Date of publication and mention of the grant of the patent: **11.10.2017**
(21) Application number: 14180101.9
(22) Date of filing: 06.08.2014
(51) Int. Cl.: B01L 3/02, G01N 35/00, B01L 9/00

(54) **Reagent carrier unit with coupling section to permit pipettor arm attachment and handling**
Reagenzträgereinheit mit Kopplungseinheit zur Pipettenarmkopplung und deren Anwendungen
Unité de support de réactif avec adaptateur de fixation a un mécanisme de pipettage et procédé d'emploi

(43) Date of publication of application: 10.02.2016
(73) Proprietor: Yantai AusBio Laboratories Co., Ltd., Yeda Yantai Shandong (CN)
(72) Inventor: Wang, Zhaoqiang, Shandong (CN)
(74) Representative: Patronus IP Patent- und Rechtsanwälte

(56) References cited:
- WO-A1-97/26539
- US-A- 4 909 991
- US-B1- 6 216 340

## Description

The present invention relates to a reagent carrier unit, an adapter and a method for handling a reagent carrier unit.

It has always been a goal to develop techniques and strategies allowing a performance of experiments in a faster and more efficient manner. This can, for example, be obtained by employing devices carrying various reagents at the same time at different units in order to test a sample liquid for several characteristics simultaneously.

US 7,510,687 B2 discloses the usage of a device to simultaneously detect different antibodies and antigens in a sample. The device comprises small absorbent cylinders, on which immunocomplexes are formed. This device, however, is difficult to be handled automatically and, therefore, still requires much hand time for its performance.

Automatic sample processing systems are well known for processing biological samples. These automatic sample processing systems comprise a laboratory robot. These laboratory robots usually have at least two movable robot arms, one is embodied for pipetting fluids and the other is embodied for handling reagent carrier units.

Often, the laboratory robots comprise several robot arms, wherein separate robot arms are provided for handling vessels and for pipetting fluids.

Robots, which are embodied for pipetting any kind of liquids are well known to a person skilled in the art. These kinds of robots are also called liquid handler.

The robot arms for pipetting fluids are also called pipetting arms and are embodied as a thin tube which is connected by means of a flexible hose to a pump. The stiff tube section is arranged vertically and provided with moving means for moving the pipetting arm in the horizontal directions (X, Y) and in the vertical direction (Z).

The robot arms for handling reagent carrier units are also called handling arms and comprise a gripper for gripping a reaction nozzle. These robot arms are also movable in all three directions (X, Y, Z). The gripper means can be a fork for gripping a microtiter plate, or a smaller clamping device for gripping a single reaction vessel, such as it is shown in WO2013/174961 A2.

WO 97/26539 discloses an analytical biochemistry system featuring a substrate with reactants immobilized thereon at fixed, known locations, a holder supporting the substrate and a manipulator for transporting the holder to a fixed sample and to an inspection station. The holder may be a standard pipettor, optionally carried by a robot arm or hand as the manipulator to contact the sample for detection of the presence of target biomolecules within the sample.

US 6,216,340 B1 refers to an apparatus for automatically handling sample cups closed with a screwable cap. The apparatus for automatically opening, closing and transporting sample cups comprises a transportable gripper which includes a rotatable gripper tool adapted to enter and engage with a recess of said cap to form a connection which can be locked by rotating the gripper tool in a first sense with respect to said sample cup and which can be unlocked by rotating the gripper tool with respect to said sample cup in a second sense opposite to the first.

In US 6,656,724 B1 a laboratory robot is disclosed. The robot comprises a pipette apparatus with a pipetting arm for pipetting sample substances and a thermocycler. These two devices are spatially separated workstations. In order to transfer vessels from one workstation to the other the robot additionally comprises a handling arm for moving, e.g., microplates.

The HAMILTON BONADUZ AG, Switzerland, has developed a robot arm for a laboratory robot which is a pipetting arm having a special coupling mechanism. This mechanism is called CO-RE-technology. This pipetting arm can be coupled to pipetting tips. It is also possible to use two independent pipetting arms, wherein to each pipetting arm a gripping element is coupled so that a reagent carrier unit can be gripped in-between two such gripping elements. Thus, two pipetting arms are used as a fork for gripping reagent carrier units.

The object of the present invention is to provide a reagent carrier unit, an adapter and a method for handling a reagent carrier unit which increases the throughput of an ordinary laboratory robot significantly by low costs.

The object is solved by a reagent carrier unit, an adapter and a method for handling a reagent carrier unit according to the independent claims. Preferred embodiments of the invention are defined in the corresponding subclaims.

The basic principle of the invention is that a single ordinary pipetting arm can be used for handling a reagent carrier unit.

The reagent carrier unit can be a single reaction vessel, a vessel card, comprising a plurality of reaction vessels arranged in line or a microplate comprising a plurality of reaction vessels arranged in a two-dimensional array, or a rod.

A reagent carrier unit is a body for carrying reagents, which can be held by the reagent carrier unit by means of a vessel, by means of surface interactions, and/or by magnetic forces. Preferably a reagent carrier unit is made of plastic. Preferred reagent carrying units are vessels or rods, or combinations thereof.

The rods can for example comprise a magnetic element. These magnetic rods are then used to capture beads coated with, for example, antibodies. Also the direct coating of non-magnetic rods with, e.g., an antibody is possible.

In order to coat the rod with an antibody or antigen its surface can be modified accordingly, which is well known to a person skilled in the art.

According to the first aspect of the present invention a reagent carrier unit being a vessel card or a microplate having a plurality of reaction vessels, comprising a coupling section for releasable coupling with a pipetting arm coupling section (18) of a pipetting means of a laboratory robot (1) for releasable coupling a pipetting tip, wherein the coupling section is a tapered recess (36) having an inner surface being complementary shaped with respect to the outer surface of the pipetting arm coupling section (18) for fixing the reagent carrier unit to the pipetting arm coupling section (18) by frictional force and/or by means of a vacuum applied by the pipetting arm, wherein the recess (36) is a special blind hole of the reagent carrier unit, which is different compared to the reaction vessel.

Besides a plurality of reaction vessels the reagent carrier unit can comprise a reaction vessel or a rod for carrying reagents.
A lower section of the rod allows the immobilization of reagents on the surface of the rod. This can be accomplished by means of surface interactions like e.g. coating or coupling. Alternatively, the rod can comprise a magnetic element, so that reagents can be immobilized via magnetic beads on the surface of the rods. This lower section is called reaction section. Thereby the rod is made of a material allowing the coupling or coating of the rod with reagents, like e.g. antibodies or antigens.

The reagent carrier unit comprises a coupling section for releasable coupling with a pipetting arm coupling section of a pipetting means of a laboratory robot.

According to the present invention the reagent carrier unit comprises a blind hole, which is adapted to the shape of the pipetting arm coupling section The blind hole is a special hole within the coupling section of the reagent carrier unit.

Preferably the blind hole is shaped conical.

The second aspect of the present disclosure is to provide an adapter for gripping a reagent carrier unit comprising
- an upper coupling section for releasable coupling the adapter with a pipetting arm coupling section of a pipetting arm of a laboratory robot, and
- a lower coupling section for releasable coupling the adapter with a reagent carrier unit.

Another embodiment of the present invention is a reagent carrier unit, which comprises a plurality of reaction vessels and an adapter for gripping reagent carrier units, comprising an upper coupling section for releasable coupling the adapter with a pipetting means of a laboratory robot, and a lower coupling section for releasable coupling the adapter with a reagent carrier unit.

In one embodiment of the present invention the lower coupling section has a complementary shaped outer surface with respect to an inner surface of a reagent carrier unit which is to be gripped, so that by inserting the lower coupling means into the reagent carrier unit the reagent carrier unit is gripped by frictional force.

The present invention also discloses embodiments, wherein the reagent carrier unit itself can be gripped by frictional forces with a pipetting arm coupling section of a pipetting means of a laboratory robot.

In another embodiment the reagent carrier unit itself or the adapter can be gripped by sucking it by means of the regular usage of the pipette arm, and/or can be released by blowing off air from the pipette arm by means of regular usage of the pipette arm.

Therefor the pipetting arm coupling section sealable abuts against the coupling section of the reagent carrier unit or the adapter. By sucking out air from the reagent carrier unit or from the adapter a vacuum is generated holding the reagent carrier unit directly or by means of the adapter to the pipetting arm coupling section. Said connection can be disconnected again by blowing off air from the pipette arm.

This provides a controlled gripping and releasing of the reagent carrier units with an ordinary liquid handler. Any liquid handler can be used. There is no need to mechanically adapt the liquid handler for enabling it to handle also reagent carrier units.

A further embodiment refers to a reagent carrier unit with an adapter, wherein the lower coupling means of the adapter comprises an elastic clamp which is embodied for gripping a reagent carrier unit by snapping the upper portion of the reagent carrier unit.

One embodiment of the present invention refers to a reagent carrier unit with an adapter, wherein the upper coupling section of the adapter comprises a recess having a complementary shaped inner surface with respect to an outer surface of a pipetting arm coupling section.

Another embodiment according to the present invention is a reagent carrier unit with an adapter, wherein the upper coupling section comprises a blind hole, preferably a conical shaped blind hole.

In other embodiments according to the invention the upper coupling section of the reagent carrier unit or the adapter can be releasable coupled to a pipette tip, preferably by placing the pipette tip into the blind hole.

The third aspect of the present invention is a method for handling a reagent carrier unit using a pipetting robot comprising a movable pipetting arm having a pipetting arm coupling section for releasable coupling a pipetting tip, and the coupling section of the pipetting arm is used to grip the reagent carrier unit, so that the reagent carrier unit can be moved by moving the pipetting arm.

In another embodiment of the present invention the method according to the invention the moving of the reagent carrier unit to a target place, where it is released at the target place, wherein the releasing at the target place can be carried out by one of the following steps
- placing the reagent carrier unit below a stop, so that by moving upwards of the pipetting arm the reagent carrier unit is released from the pipetting arm, or
- by stripping.

According to another embodiment of the present invention the method includes the gripping and/or releasing of the reagent carrier unit by friction forces.

In another embodiment of the invention the method comprises the handling of a reagent carrier, wherein the reagent carrier unit is gripped by sucking it by means of the regular usage of the pipette arm, and/or wherein the reagent carrier unit is released by blowing off air from the pipette arm by means of regular usage of the pipette arm. However, it cannot be excluded that in cases when the reagent carrier unit is handled by the regular usage of the pipette arm, in terms of sucking and blowing air or liquid, frictional forces are completely absent. Rather a combination of forces arising from friction and vacuum might occur.

All aspects of the present invention is common that with a pipetting arm of a laboratory robot a reagent carrier unit can be both pipetted and handled. To handle a reagent carrier unit means moving the reagent carrier unit from one initial place to a target place. The pipetting and handling of a reagent carrier unit is accomplished by either embodying the reagent carrier unit so that it can be directly coupled to the pipetting arm coupling section, or providing an adapter for coupling the reagent carrier unit to the pipetting arm coupling section.

By using one single pipetting arm for both pipetting and handling reagent carrier units the throughput of an ordinary laboratory robot can be significantly increased, because the pipetting arm can either be used for pipetting or for handling the reagent carrier unit and if the laboratory robot comprises a plurality of pipetting arms, these pipetting arms can be used very flexible for pipetting or for handling reagent carrier units. So the use of the pipetting arm can be adapted to the actual needs of the process conducted on the laboratory robot. When biological samples are automatically processed with a laboratory robot often situations occur in that many reagent carrier units have to be handled simultaneously or many samples have to be pipette simultaneously. According to the present invention the pipetting arms can be used for both, pipetting and handling reagent carrier units, so that such situations can be quickly processed, because the plurality of reagent carrier units are simultaneously handled by the plurality of pipetting arms or the plurality of samples are simultaneously pipetted by the plurality of the same pipetting arms. Thus, it is possible to achieve a much higher throughput in comparison to ordinary laboratory robots with a lower total number of roboting arms, because there is no need to provide separate robot arms for pipetting and for handling reagent carrier units.

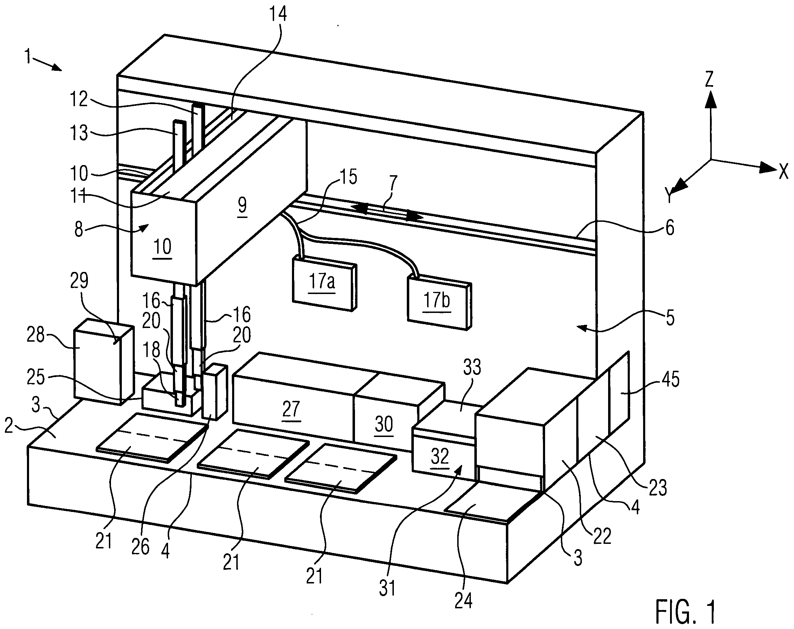

The invention will now be explained by way of an example with reference to the attached drawings in which
- Figure 1: is a schematic view in perspective of a laboratory robot for pipetting samples and handling reagent carrier units,
- Figure 2a-g: is a vessel card in different views,
- Figure 3: shows an adapter together with a coupling section of a pipetting arm and reagent carrier units, and
- Figure 4: shows another example of an adapter together with a pipetting arm coupling section and reagent carrier units.
- Figure 5a-d: shows different views of rods and pipetting tips for handling the rods as well as a microplate

A laboratory robot 1 comprises a rectangular work surface 2 having two face edges 3 and a front and rear longitudinal edge 4. Arranged on the work surface 2 at its rear longitudinal edge 4 is a rear wall 5. Provided at the upper edge portion in the rear wall 5 is a horizontal rail 6 running parallel to the rear longitudinal edge 4 of the work surface 2. Mounted travelling on the rail 6 in the longitudinal directions thereof (double-arrow 7, X direction) is a robotic arm 8.

The robotic arm 8 is arranged straight and parallel to the face edges 3 of the work surface 2, it thus standing perpendicular to the plane of the rear wall 5. The robotic arm 8 is outwardly defined by comprising two longitudinal walls 9 and a face wall 10 at its free end, wherein the longitudinal walls 9 and the face wall 10 are arranged U-shaped as viewed from above. Disposed between the two longitudinal walls 9 is a rail 11. Mounted travelling on the rail 11 in the longitudinal direction thereof (Y-direction) are two Z-arms 12, 13. Each of the two Z-arms 12, 13 extends vertically through a gap 14 between the rail 11 and one of said longitudinal side walls 9.

The robotic arm 8 is powered to travel along the rail 6 (X-direction) and the Z-arms 12, 13 along (Y-direction) and perpendicular to (Z-direction) the rail 11 so that the Z-arms 12, 13 can cover substantially the complete area (X-direction, Y-direction) above the work surface 2 and are height-adjustable (Z-direction).

This embodiment comprises a single robotic arm 8 and two Z-arms 12, 13. The robotic arm 8 can also comprise only one single Z-arm or more than two Z-arms, such as three, four, eight, or sixteen Z-arms. It is also possible that the laboratory robot 1 comprises several robotic arms 8, particularly two robotic arms 8 which are preferably travelling on the same rail 6.

The Z-arms 12, 13 are embodied as pipette arms 12, 13 which means that the pipette arms 12, 13 comprise a tube section 16 which is connected via a flexible hose 15 to two pumps 17a, 17b. The pump 17a is a syringe pump for precise micro dispensing (1µl) whereas the second pump 17b is a wash pump having a greater throughput (e.g. ≥ 100 ml/min) than the syringe pump 17a and can be used for washing the tube section 16. The tube section 16 is rigid. A pipetting arm coupling section 18 is embodied at the lower end of the tube section. The pipetting arm coupling section 18 is provided for releasable coupling pipetting tips 19 to the pipetting arms 12, 13.

The pipetting arm coupling section 18 has a complimentary shaped outer surface with respect to an inner surface of the pipetting tips 19. Thus, the pipetting arm coupling section 19 fits into a corresponding recess of the pipetting tip 19, wherein the pipetting tip 19 is fixed to the pipetting arm coupling section 18 by means of frictional force.

The pipetting arm 12, 13 can comprise a vertically movable sleeve 20 which surrounds the pipetting arm coupling section 18 and which is provided for stripping-off a pipetting tip 19 placed on the pipetting arm coupling section 18. The sleeve 20 is actuated by an actuator. Alternatively it is possible that a pipetting tip 19 is removed from the pipetting arm coupling sections 18 in that the pipetting tips 19 is released by pushing the pipetting tips 19 against a horizontal stop so that the pipetting tip 19 is tilted with respect to the pipetting arm coupling section 18 and released. Another possibility to release a pipetting tip 19 is to move the pipetting tip 19 below an upper stop so that the pipetting tip 19 abuts against the upper stop. By moving upwards of the pipetting arm 12, 13 the pipetting tip 19 is released from the pipetting arm 12, 13.

A further alternative for releasable connecting a pipetting tip 19 to a pipetting arm coupling section 18 is the above discussed mechanism comprising an extendable O-ring (CO-RE technology) of HAMILTON BONADUZ AG.

The Z-arms of the robotic arm 8 can be moved independently along the rail 11 or synchronously, wherein the distance in-between the Z-arms is kept constant or the distance between the neighbouring Z-arms can be synchronously enlarged or reduced.

Arranged on the work surface 2 are reagent carrier unit mounts 21. The reagent carrier unit mounts 21 are mounted fixtures configured so that any kind of reagent carrier unit, such as microplates, vessel cards, individual reaction vessels and/or reagent carrier rods can be placed. The microplates, the vessel cards and/or the individual reaction vessels are precisely registered relative to the work surface 2 so that the site of each reagent carrier unit and the corresponding vessels is precisely defined and can thus be located precisely by the pipetting arms 12, 13. The reagent carrier unit mounts 21 define such deposition of the reagent carrier units with respect to the laboratory robot 1. The reagent carrier unit mounts 21 are preferably arranged at the front longitudinal edge 4 of the work surface 2 to facilitate placement of the reagent carrier units thereon by a laboratory worker or a further laboratory device coupled to the laboratory robot. Provided alongside one said face edges 3 is a centrifuge 22 which is coupled to a stacking lift 23. The stacking lift 21 and the centrifuge 22 comprise a loading mechanism 45 having a flexible elongated beam for extension and retraction of a microplate or a vessel carrier. Such a vessel carrier is embodied for receiving a microplate, one or more vessel cards or one or more individual reaction vessels. Such a loading mechanism is described in EP14152860.4. The actuating mechanism of the flexible elongated beam is located rearwards of the centrifuge 22 and the stacking lift 23, wherein in the extended state the flexible elongated beam extends through the centrifuge 22 and through the stacking lift 21 to a front platform 24 for loading and unloading a reagent carrier unit. The stacking lift 23 is embodied for storing several microplates or vessel carriers.

Provided in the rear portion of the work surface 2 are a chemical reservoir 25, a wash station 26, a pipette tip magazine 27 for the disposable pipette tips 19 and a pipette tip sweeper 28 for sweeping the disposable pipette tips 19. The disposable pipette tips are arranged vertically in the pipette tip magazine 27 so that the one of the pipette arms 12, 13 simply by lowering its pipetting arm coupling section 18 thereinto picks a disposable pipette tip 18 which after use is swept away by the pipette tip sweeper 28.

Arranged on the pipette tip sweeper is a horizontally protruding pointer 29 of an electrically conductive and flexible material. The disposable pipette tips 19 used are made of a conductive material such as e.g. a plastic incorporating graphite.

After being picked a new disposable pipette tip 19 is brought into contact with or near to the pointer 29. The pointer 29 is connected to a sensing means which senses a capacitance, from the result of which the system can "see" whether a disposable pipette tip 19 is correctly coupled to the pipetting arm coupling section 18.

When employing a reusable pipette tip this can be inserted as required in the wash station 26 between the individual pipetting actions and cleaned by being flushed out profusely with water by means of the wash pump 17b.

An adapter magazine 30 for adapters for handling reagent carrier units is provided on the work surface 2. The adapters are arranged vertically in the adapter magazine 30 so that the pipette arms 12, 13 simply by lowering its pipetting arm coupling section 18 thereinto picks an adapter 38. The adapters 38 are explained below in more detail.

Arranged in the chemicals reservoir 25 is a plurality of vessels open at the top and hold various chemicals. The vessels of the chemicals reservoir 25 may be closed off by means of covers removed and refitted by means of a corresponding cover actuating adapter which can be releasable coupled to the pipetting arm coupling section 18.

A thermocycler tank 31 is arranged on the work surface 2. The thermocycler tank 31 consists of a base body 32 open at top which may closed off by means of an automatic lid 33. Provided in the thermocycler tank 31 are heating and cooling elements enabling the interior to be set at a specific temperature. It is also possible by means of the heating and cooling elements to configure specific temperature profiles. A Peltier-element is used preferably as the heating and cooling element which is capable of both removing and supplying heat. A typical temperature range of one such thermocycler is -5°C to 120°C and the temperature can be varied at a heating/cooling rate of 2°C/s to 10°C/s.

The laboratory robot comprises a controlling unit (not shown) for controlling both the movement of the Z-arms 12, 13 as well as the individual functional elements such as e.g. the pumps 17a, 17b, the centrifuge 22, the stacking lift 23 and the thermocycler tank 31. The controlling unit is a microprocessor controlled device and configured as a multi-tasking controller, i.e. capable of implementing a monitoring of several control actions at the same time.

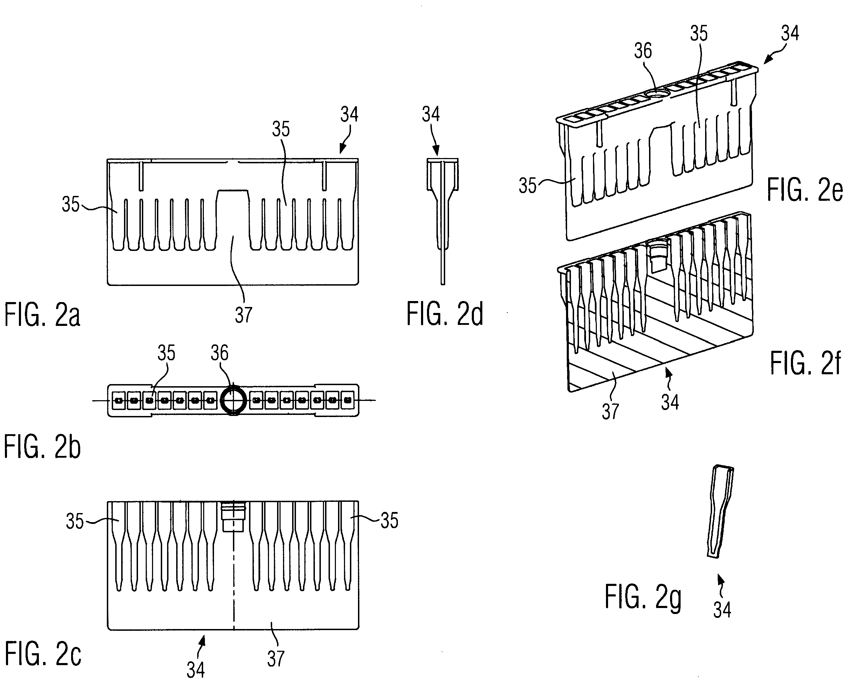

Figures 2a-2g show a vessel card in different views comprising several reaction vessels 35 arranged in line. The vessel card 34 is made of a transparent plastic material such as PP, PE or PC. The reaction vessels 35 are arranged in parallel to each other and are opened at an upper edge of the vessel card 34. A recess 36 is provided in the middle of the vessel card which has an inner surface being complementary shaped with respect to the outer surface of the pipetting arm coupling section 18. In the present case the recess 36 comprises an inner diameter of 3-6 mm, wherein the recess is slightly tapered downwards. The recess 36 is opened to the upper edge of the vessel card 34. The embodiment of the vessel card 34 according to Figure 2a-2g comprises an intermediate wall 37 in-between the reaction vessels 35 which extends below the lower end of the reaction vessel 35. The vessel card 34 can also be embodied without such an intermediate wall, wherein the reaction vessels are only connected at the upper section with each other. Such a kind of vessel card 34 can be put into a work mount 21 which is also suitable for taking-up a microplate.

One of the pipette arms 12, 13 can simply pick up such a vessel card 34 by lowering its pipetting arm coupling section 18 into the recess 36. The vessel 34 is then fixed to the pipetting arm coupling section 18 by frictional force. The vessel 34 can be also fixed to the pipetting arm coupling section 18 by means of a vacuum applied by the pipetting arm. The vacuum can be used alternatively or in combination with the frictional force. Thus, the recess 36 forms a reaction vessel coupling section. The connection between the pipetting arm coupling section 18 and the recess 36 or reaction vessel coupling section 36 can be released in the same way as it is known from pipette tips by pushing the vessel card 34 against a horizontal stop, so that the vessel card is tilted with respect to the pipetting arm coupling section 18 and released, or by moving the vessel card 34 below an upper stop so that the vessel card 34 abuts against the upper stop. By moving upwards of the pipetting arm 12, 13 the vessel card 34 is released from the pipetting arm 12, 13. The connection between the pipetting arm coupling section 18 and the recess 36 or reaction coupling section 36 can be released by reducing the vacuum.

In the present embodiment the recess 36 is arranged in the middle of the vessel card 34 so that the same numbers of reaction vessels 35 are provided on both sides of the recess 36. The recess 36 can also be disposed out of the center of the vessel card 34, particular in an end section of the vessel card 34. Basically, it is also possible to provide a vessel card 34 with more than one recess 36.

It is also possible to embody a microplate having a plurality of reaction vessels arranged in a two-dimensional array with such a recess 36 which forms a reaction vessel coupling section. The recess can be disposed in the center of the microplate and/or in one or more corner sections of the microplate.

In a preferred embodiment the pipetting arms 12, 13 comprise the vertically movable sleeve 20 which allows to strip-off the reagent carrier unit coupled by means of such a recess 36 to the pipetting arm coupling section 18 at a certain time in a certain place. With such a release means 20 the reagent carrier unit can be placed on any position on the work surface 2 without the need of a stop or any other means.

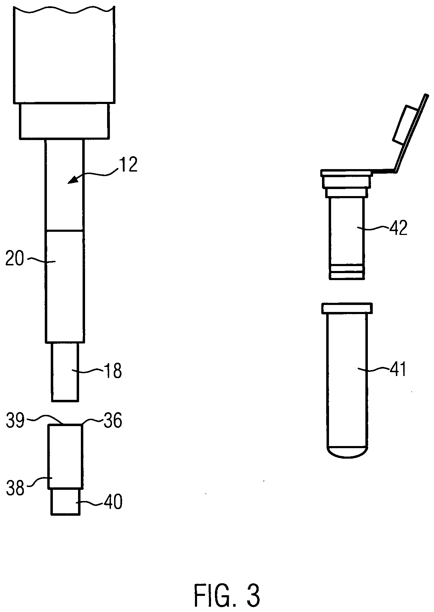

Figure 3 shows an adapter 38. In the present embodiment the adapter 38 has the basic form of a small hollow pipe. The upper section of the adapter 38 forms an upper coupling section 39, wherein the inner surface of the upper coupling section 39 corresponds to the inner surface of the above described recess 36.

The lower section of the adapter 38 forms a lower coupling section 40 for releasable coupling the adapter 38 with an ordinary reaction vessel 41. Figure 3 shows also two embodiments of such ordinary reaction vessels 41. The lower coupling section 40 has a complementary shaped outer surface with respect to an inner surface of a certain type of reaction vessels, such as the reaction vessels 41, so that by inserting the lower coupling section 40 into such a reaction vessel 41, the reaction vessel 41 is coupled by frictional force to the adapter 38.

Such an adapter 38 can be coupled to any type of reagent carrier unit, such as individual reaction vessels, vessel cards or microplates. The adapter can also be coupled to a filter unit 42, which itself can be placed in the reaction vessel 41. Such adapters can be left permanently coupled to the corresponding reagent carrier units. As the adapters 38 form hollow pipes, the reaction vessels to which the adapter 38 is coupled, can still be used. Under certain circumstances it is advantageous, if the adapter 38 is removed from the reagent carrier unit. This is e.g. the case if a microplate is to be placed in the thermocycler tank 31. The removal of the adapter 38 from the reagent carrier unit can be carried out by using a second Z-arm 13, 12 which touches the reagent carrier unit from above, so that by moving upwards the Z-arm 12, 13 being connected via the adapter 38 to the reagent carrier unit removes the adapter 38 from the reagent carrier unit. To carry out this removal process reliably the adapter 38 is designed in such a way that the frictional force between the lower coupling section 40 and the reagent carrier unit is smaller than the friction force between the upper coupling section 39 and the pipetting arm coupling section 18. Therefore, preferably the upper coupling section 39 is in vertical direction longer than the lower coupling section 40. Although the pressfit between the upper coupling section 39 and the pipetting arm coupling section 18 is preferably tighter than the pressfit between the lower coupling section 40 and the corresponding reaction vessel.

The adapter 38 can also be removed by placing the reagent carrier unit below an upper stop and by moving the corresponding Z-arm 12, 13 upwards. Furthermore the adapter 38 can be removed by reducing the vacuum.

The adapters 38 can be used as disposable tools and can be swept-off after each use into the pipette sweeper 28. The adapters 38 can also be reused and being replaced into the adapter magazine 30 after each use. Such a reuse of the adapters 38 is useful, if the reaction vessels to which the adapter 38 is coupled is not used in the biological or chemical process carried out with the laboratory robot 1. If reagent carrier unit comprises a plurality of reaction vessels then the adapter 38 is preferably coupled to one of the reaction vessels which is actually not used for a biological or chemical reaction.

Preferably different kind of adapters 38 are provided for handling different kind of reagent carrier units. The different kind of adapters can be stored in the adapter magazine 30. Thus, it is possible to handle different types of reagent carrier units with the same Z-arm 12, 13. This makes the laboratory robot 1 very flexible.

The above described sleeve 20 of the Z-arm 12, 13 or pipetting arm 12, 13 is also advantageous for releasing such an adapter from the pipetting arm coupling section 18. This releasing means allows to release the adapter 38 with or without a reagent carrier unit from the corresponding pipetting arm 12, 13 at any time and at any place on the work surface 2.

The above described adapter 38 is embodied as a hollow pipe which has a free passage from the top side to the bottom side. With such an adapter a reagent carrier unit can be gripped by applying a vacuum by sucking out the air by means of the pipetting arm. The adapter is fixed to the pipetting arm by means of friction forces and the reagent carrier unit is held at the adapter by means of vacuum.

The adapter 38 can also be embodied with a horizontal wall, particularly in the lower coupling section 40, which closes the passage in the adapter 38. Such an adapter 38 has the function of a lid for the reaction vessel. In other words, this is a lid for closing or sealing a certain reaction vessel which forms simultaneously an adapter 38 for being coupled to the pipetting arm coupling section 18. Such an adapter can be held at the pipetting arm by applying a vacuum. In combination with the release means 20 the adapter 38 can also be used for sealing one or more reaction vessels of a reagent carrier unit.

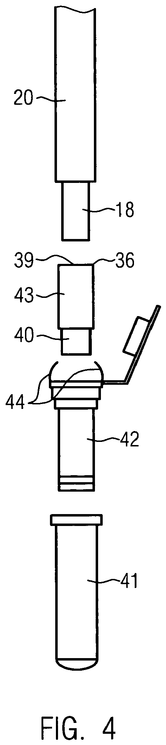

Figure 4 shows another kind of adapter which corresponds substantially to the adapter of Figure 3 with all variations besides the design of the lower coupling section 40. This adapter 43 comprises an elastic clamp 44 which is embodied for gripping a reaction vessel or filter unit by snapping the upper portion of the reaction vessel or filter unit. The elastic clamp snaps onto the reaction vessel when it is pushed downwardly onto the reaction vessel. This coupling between the reaction vessel and the adapter 43 is not releasable.

The above described means for gripping a reaction vessel provide the following advantages:
1. Ordinary grippers are mostly designed like a fork with two clamps which are put together when a reagent carrier unit shall be gripped. The reagent carrier unit can be canted when it is gripped by such a fork like gripper. By the embodiments according to the present invention wherein the pipetting arm coupling section 18 or an adapter 38 is introduced into a corresponding recess, the reagent carrier unit is automatically aligned and is safely gripped.
2. There is one gripping means for pipetting tips, microplates, vessel cards and single reaction vessels such as tubes and rods.
3. Reagent carrier units can be deeper introduced in corresponding recesses, because no fork-like gripping elements do abut against the recesses. This is particularly advantageous if the vessel cards are used as gel cards which are often put into cooling means. The active cooling surface can extend to a more upper part of the reaction vessels of the vessel card, then it is possible with cooling means combined with a robotic gripping tool according to the prior art.
4. Often reaction vessels have to be optically scanned. The fork-like grippers cover significant sections of reaction vessels which are not available for being optically scanned. The gripping means according to the present invention do not cover the outer surface of the reagent carrier units and do not disturb optical detection.
5. The simple robotic means can be used for a simultaneously handling and pipetting reaction vessels. In the above described example the robot means comprise one robotic arm to which two Z-arms are connected. The known robotic arms are comprising several hinges, wherein the robotic arms can be automatically bent at each hinge. With such roboting arms a flexible system can be provided as several robotic arms can be used simultaneously on the same work surface, where each roboting arm has a different kind of tool. But these kind of robotic arms are very expensive and complicated to program and to teach. As the present invention the laboratory robot comprises pipetting arms which can be used for pipetting and handling or by means of a further adapter for another purpose, the laboratory robot needs only one kind of pipetting arm to provide a plurality of different functions. This minimizes the mechanical efforts and the efforts which are needed for controlling the pipetting arms.
6. The reagent carrier units according to the present invention and the adapters allow to use ordinary devices which are embodied for pipetting only also for handling the reagent carrier units. Thus, the function of ordinary devices can be significantly enlarged. The gripping of the reagent carrier units not even requires a different way of functioning of the pipetting robots. Rather by the regular usage in terms of sucking and blowing the robots can be used to grip devices.
7. Laboratory robots comprise often four or eight pipetting arms in a row. These pipetting arms can be used for handling simultaneously four or eight vessel cards. This provides a significant acceleration in processing vessel cards.
8. There is a small number of standards for the design of pipetting tips. The adapters and/or the recesses of the reaction vessels have just to be compatible to the known standards. Thus, a low number of adapters is suitable to be connected to the known pipetting arms.

The above described example for a laboratory robot comprises not rotatable Z-arms 12, 13. It is also possible to embody the Z-arms rotatable, particularly to be rotated around an angle of 90°. Such a rotation allows to rotate the reagent carrier units. This allows different positions for direction sensitive elements such as a camera for optical detection or a processing means for processing the content of the reaction vessels of a vessel card or a microplate. Thus, the arrangement of the function and devices on the work surface is more flexible.

Furthermore, rotating the pipetting arm allows also to use a bayonet connector for connecting the pipetting arm to the adapter or the reagent carrier unit. In such a case the pipetting arm and the recess of the adapter or the reagent carrier unit, respectively, have to be embodied as male or female part of the bayonet connector.

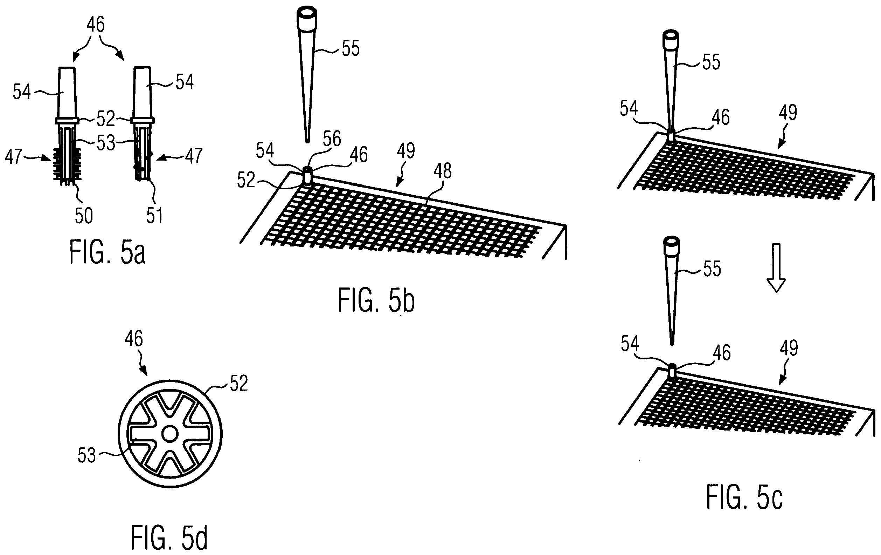

Additionally, the present disclosure can be used to obtain a faster performance of experiments using a rod system to capture the target molecule (Figure 5a d).

Thus, an alternative of the present disclosure are rods used for carrying reagents. These rods can also be used in a manual operation or with a robot having a gripper for gripping such rods.

A rod system comprises rods 46 which can be magnetic or non-magnetic (Figure 5a). The design of the rods 46 has to be in way to meet several technical requirements. The diameter of the part of the rod, which will be placed in the reaction vessel 47 has to be adjusted to the diameter of the reaction vessel 48 (Figure 5b). The rods can be used for either single reaction vessels or for microtiter plates 49 with 96, 384 or more vessels. Therefor, the diameter of said rod part has to be smaller than one of the vessel but should not be too small to avoid staggering around of the rod within the vessel.

Furthermore, the rod should not have any contact with the walls of the reaction vessel since this could lead to the removal of bound antibodies 50 or antigens 51 on the rod. Therefore, the rod comprises a protrusion 52, whereby the protrusion is located above the rod part being within the vessel 47. This prevents the rod from further entering into the vessel and from touching the bottom part (walls or bottom) of the vessel. Said protrusion 52 can be shaped like a ring, for example, or can just be one or more small protrusion(s).

The part of the rod being placed in the vessel can be shaped in any way fitting in the vessel. This can for example be cylindrical or conical. Further to increase the surface of this part of the rod it can, for example, be cross-shaped or star-shaped (Figure 5d).

Other shapes like e.g. vertical ridges 53 or edges are also suitable to increase the surface of the rod.

The rods for these kinds of experiments can for example comprise a magnetic element. These magnetic rods are then used to capture beads coated with, for example, antibodies. Also the direct coating of non-magnetic rods with, e.g., an antibody is possible.

In order to coat the rod with an antibody or antigen its surface can be modified accordingly, which is well known to a person skilled in the art.

The upper part of the rod 54, which is located above the vessel after placing the rod within the vessel, is designed in a way that it is possible to transfer the rod with a (standard) pipette tip 55 (Figure 5c), which itself can be coupled to a pipette arm coupling section. A preferred design comprises a blind hole 56 on top of the rod of a size that a (standard) pipette tip can be put in for a few millimeters, e.g., 1 to 12 mm. Depending on the tips used (e.g. from 1000 µl to 1 µl) the tip enters the blind hole with different depth. When placing the tip inside of the hole by pressure, the shaft of the tip should stick stronger to the pipette itself than the tip sticks in the hole of the rod. Otherwise the tip would stay stuck in the rod.

In order to transfer the rod it is preferred that the hole is construed in shape of a tapered blind hole. Thereby, when placing the tip in the hole an airtight seal will be created by it. Once placed within the hole the pipette can generate a vacuum within the hole by sucking out the air by means of regular usage of the pipette. The vacuum will hold the rod on the pipette tip and it can be transferred to, e.g., the next reaction vessel. To release the rod the air is blown out by the regular pipette mechanism when blowing out any liquid. The rod will then be released from the pipette tips and can e.g., slide in the reaction vessel up to the point where the protrusion 62 will hold it back.

Regular gripping devices commonly grip devices alongside. This comes along with the need of space for the gripping device for every single device to be gripped. For placing rods in every single vessel of a microplate a simultaneous gripping of rods for every vessel is barely realizable. According to the present mechanism by using the pipettes together with the tips as gripping devices as many rods can be placed in reaction wells as many pipette tips are held by the pipette device. Also single selected vessels on one plate can be used with the rod system while others are left unused.

Commonly used pipette robots can carry a maximum of 96 standard pipette tips. This number is limited due to reaction well size and the diameter of the pipette tip at its upper end where it is coupled to the pipette device. There are pipette arms carrying more than 96 tips, e.g. 384, however, these are employing special tips, which are expensive. In order to handle the rods disclosed herein in higher numbers than 96 either expensive special tips have to be employed or, since the design of these rods allows the handling with normal prized standard pipette tips and a standard pipetting head with 96 channels, the rods just need to be moved four times in order to fill a complete 384 vessel plate with 384 rods. These steps, however, do not need much time and, thus, do not slow down the experimentation process in a significant manner. The rods can be moved in a staggered way to place a rod in every second vessel of a 384 plate, for example. Even the handling of more than 384 rods for plates with more vessels can be realized and only requires the adaption of the rod size in accordance with the vessel size.

Thus, the rods and their convenient way of handling via pipette tips allow a fast handling of high numbers of rods, which can be automated easily without additional costs for special tips or pipette devices.

The vessels can be filled with different sample liquids in order to perform quick testing of several samples on one plate by using rods coated with the same or different antibodies or antigens.

After coating the rods or collecting the coated beads, the rods are then placed in the reaction vessel containing the corresponding sample liquid.

When transferring the rod from one reaction vessel to the next (depending on the experiment many transfers might be required) the transfer of residual sample liquid is undesired. Therefore, the rod can be placed in an empty reaction vessel, which can be put in the centrifuge according to the present invention. By a centrifugation step with the opening of the reaction vessel directed radially inwards the unwanted residual liquid can be removed easily from the rod before transferring it to the next reaction vessel.

By this, the amount of unwanted transferred residual liquid can be reduced enormously resulting in improved reaction conditions.

The present disclosure provides a fast and convenient handling of the single rods, which can be fully automated and integrated in an automated workflow.

**List of references**

| | | | |
|---|---|---|---|
| 1 | Laboratory robot | 30 | Adapter magazine |
| 2 | Work surface | 31 | Thermocycler tank |
| 3 | Face edge | 32 | Base body |
| 4 | Longitudinal edge | 33 | Automatic lid |
| 5 | Rear wall | 34 | Vessel card |
| 6 | Rail | 35 | Reaction vessel |
| 7 | Double arrow | 36 | Recess |
| 8 | Robotic arm | 37 | Intermediate wall |
| 9 | Longitudinal wall | 38 | Adapter |
| 10 | Face wall | 39 | Upper coupling section |
| 11 | Rail | 40 | Lower coupling section |
| 12 | Z-arm | 41 | Reaction vessel |
| 13 | Z-arm | 42 | Filter unit |
| 14 | Gap | 43 | Adapter |
| 15 | Hose | 44 | Elastic clamp |
| 16 | Tube section | 45 | Loading mechanism |
| 17a | Syringe pump | 46 | Rod |
| 17b | Wash pump | 47 | Lower section of the rod |
| 18 | Pipetting arm coupling section | 48 | Reaction vessel |
| 19 | Pipetting tip | 49 | Microtiter plate |
| 20 | Sleeve | 50 | Antibody |
| 21 | Work mount | 51 | Antigen |
| 22 | Centrifuge | 52 | Protrusion |
| 23 | Stacking lift | 53 | Ridges/edges |
| 24 | Front platform | 54 | Upper section of the rod |
| 25 | Chemicals reservoir | 55 | Schematic depiction of a pipette tip |
| 26 | Wash station | | |
| 27 | Pipette tip magazine | 56 | Blind hole |
| 28 | Pipette tip sweeper | | |
| 29 | Pointer | | |

## Claims

1. Reagent carrier unit being a vessel card or a microplate having a plurality of reaction vessels, comprising
a coupling section for releasable coupling
with a pipetting arm coupling section (18) of a pipetting means of a laboratory robot (1) for releasable coupling a pipetting tip,
wherein the coupling section is a tapered recess (36) having an inner surface being complementary shaped with respect to the outer surface of the pipetting arm coupling section (18) for fixing the reagent carrier unit to the pipetting arm coupling section (18) by frictional force and/or by means of a vacuum applied by the pipetting arm, wherein the recess (36) is a special blind hole of the reagent carrier unit, which is different compared to the reaction vessel.

2. Reagent carrier unit according to claim 1, wherein
the reagent carrier unit comprises an adapter (38) for gripping reagent carrier units comprising an upper coupling section (39) for releasable coupling the adapter (38) with a pipetting means of a laboratory robot (1), and a lower coupling section (40) for releasable coupling the adapter (38) with a reagent carrier unit.

3. Reagent carrier unit according to claim 2, wherein
the lower coupling section (40) has a complementary shaped outer surface with respect to an inner surface of a reagent carrier unit which is to be gripped, so that by inserting the lower coupling means into the reagent carrier unit the reagent carrier unit is gripped by frictional force.

4. Reagent carrier unit according to claim 2 or 3, wherein
the lower coupling section (40) comprises an elastic clamp (44) which is embodied for gripping a reagent carrier unit by snapping the upper portion of the reagent carrier unit.

5. Reagent carrier unit according to any of claims 2 to 4, wherein
the upper coupling section (39) comprises a recess (36) having a complementary shaped inner surface with respect to an outer surface of a pipetting arm coupling section (18).

6. Reagent carrier unit according to any of claims 2 to 5, wherein
the upper coupling section (39) comprises a blind hole (56), preferably a conical shaped blind hole.

7. Reagent carrier unit according to any of claims 2 to 6, wherein
the upper coupling section (39) can be releasably coupled to a pipette tip (19, 55), preferably by placing the pipette tip (19, 55) into the blind hole (56).

8. Reagent carrier unit according to any of claims 1 to 7, wherein the reagent carrier unit is a gel card.

9. Method for handling a reagent carrier unit according to any of claims 1 to 8 using a pipetting robot comprising a movable pipetting arm having a pipetting arm coupling section (18) for releasable coupling a pipetting tip (19, 55), and the coupling section (18) of the pipetting arm is used to grip the reagent carrier unit in a recess, so that the reagent carrier unit can be moved by moving the pipetting arm, wherein the reagent carrier unit is a vessel card or microplate having a plurality of reaction vessels, and wherein the recess (36) is a special blind hole of the reagent carrier unit, which is different compared to the reaction vessel.

10. Method for handling a reagent carrier unit according to claim 9, wherein
the reagent carrier unit is moved to a target place and is released at the target place, wherein the releasing at the target place can be carried out by one of the following steps
- placing the reagent carrier unit below a stop, so that by moving upwards of the pipetting arm the reagent carrier unit is released from the pipetting arm,
- by reducing a vacuum for holding the reagent carrier unit, or
- by stripping.

11. Method for handling a reagent carrier unit according to claim 9 or 10, wherein
the reagent carrier unit is gripped and/or released by friction forces.

12. Method for handling a reagent carrier unit according to any of claims 9 to 11, wherein
the reagent carrier unit is gripped by sucking it by means of the pipette arm, and/or wherein the reagent carrier unit is released by blowing off air from the pipette arm by means of the pipette arm.

## Patentansprüche

1. Reagenzträgereinheit, die eine Gefäßplatte oder eine Mikrotiterplatte umfassend eine Vielzahl von Reaktionsgefäßen ist, umfassend
einen Kopplungsabschnitt zur lösbaren Kopplung, mit einem Pipettierarmkopplungsabschnitt (18) eines Pipettiermittels eines Laborroboters (1) zum lösbaren Koppeln einer Pipettierspitze (19) eines Pipettiermittels,
wobei der Kopplungsabschnitt eine sich verjüngende Ausnehmung (36) ist, der eine in Bezug auf eine Außenfläche des Pipettierarmkopplungsabschnitts (18) komplementär geformte Innenfläche aufweist, um die Reagenzträgereinheit an dem Pipettierarmkopplungsabschnitts (18) durch Reibungskraft und/oder mittels eines durch den Pipettierarm angewendeten Vakuums zu befestigen,
wobei die Ausnehmung (36) ein spezielles Blind- oder Sackloch der Reagenzträgereinheit ist, welches sich im Vergleich zum Reaktionsgefäß unterscheidet.

2. Reagenzträgereinheit gemäß Anspruch 1, wobei
die Reagenzträgereinheit aufweist: Einen Adapter (38) zum Greifen von Reagenzträgereinheiten, der einen oberen Kopplungsabschnitt (39) aufweist zur lösbaren Kopplung des Adapters (38) mit einem Pipettiermittel eines Laborroboters (1), und einen unteren Kopplungsabschnitt (40) zur lösbaren Kopplung des Adapters (38) mit einer Reagenzträgereinheit.

3. Reagenzträgereinheit gemäß Anspruch 2, wobei
der untere Kopplungsabschnitt (40) eine komplementär geformte Außenfläche bezogen auf eine Innenfläche einer zu ergreifenden Reagenzträgereinheit aufweist, so dass durch Einsetzen des unteren Kopplungsmittels in die Reagenzträgereinheit die Reagenzträgereinheit durch Reibungskraft ergriffen wird.

4. Reagenzträgereinheit gemäß Anspruch 2 oder 3, wobei
der untere Kopplungsabschnitt (40) eine elastische Klemme (44) aufweist, die zum Greifen einer Reagenzträgereinheit durch Einrasten des oberen Teils der Reagenzträgereinheit ausgebildet ist.

5. Reagenzträgereinheit gemäß einem der Ansprüche 2 bis 4, wobei
der obere Kopplungsabschnitt (39) eine Ausnehmung (36) mit einer komplementär geformten Innenfläche in Bezug auf eine Außenfläche eines Pipettierarmkopplungsabschnitts (18) aufweist.

6. Reagenzträgereinheit gemäß einem der Ansprüche 2 bis 5, wobei der obere Kopplungsabschnitt (39) ein Blind- oder Sackloch (56), vorzugsweise ein konisch geformtes Blind- oder Sackloch, aufweist.

7. Reagenzträgereinheit gemäß einem der Ansprüche 2 bis 6, wobei der obere Kopplungsabschnitt (39) mit einer Pipettenspitze (19, 55) lösbar gekoppelt werden kann, vorzugsweise durch Platzieren der Pipettenspitze (19, 55) in dem Blind- oder Sackloch (56).

8. Reagenzträgereinheit gemäß einem der Ansprüche 1 bis 7, wobei die Reagenzträgereinheit eine Gelplatte ist.

9. Verfahren zur Handhabung einer Reagenzträgereinheit gemäß einem Ansprüchen 1 bis 8 unter Verwendung eines Pipettierroboters mit einem beweglichen Pipettierarm mit einem Pipettierarmkopplungsabschnitt (18) zur lösbaren Kopplung einer Pipettierspitze (19, 55), und der Kopplungsabschnitt (18) des Pipettierens Arm wird verwendet, um die Reagenzträgereinheit in einer Ausnehmung zu greifen, so dass die Reagenzträgereinheit durch Bewegen des Pipettierarms bewegt werden kann,
wobei die Reagenzträgereinheit eine Gefäßplatte oder eine Mikrotiterplatte umfassend eine Vielzahl von Reaktionsgefäßen ist, und wobei die Ausnehmung (36) ein spezielles Blind- oder Sackloch der Reagenzträgereinheit ist, welches sich im Vergleich zum Reaktionsgefäß unterscheidet.

10. Verfahren zur Handhabung einer Reagenzträgereinheit gemäß Anspruch 9, wobei die Reagenzträgereinheit zu einer Zielstelle bewegt und an der Zielstelle freigesetzt wird, wobei die Freisetzung an der Zielstelle durch einen der folgenden Schritte durchgeführt werden kann:
- Platzieren der Reagenzträgereinheit unterhalb eines Anschlags, so dass durch Bewegen des Pipettierarms nach oben die Reagenzträgereinheit von dem Pipettierarm freigesetzt wird,
- durch Verringerung eines Vakuums zum Halten der Reagenzträgereinheit oder
- durch Abstreifen.

11. Verfahren zur Handhabung einer Reagenzträgereinheit gemäß Anspruch 9 oder 10, wobei die Reagenzträgereinheit durch Reibungskräfte ergriffen und / oder freigesetzt wird.

12. Verfahren zur Handhabung einer Reagenzträgereinheit gemäß einem der Ansprüche 9 bis 11, wobei
die Reagenzträgereinheit durch Saugen mittels des Pipettenarms ergriffen wird und / oder wobei die Reagenzträgereinheit durch Abblasen von Luft durch den Pipettenarm mittels des Pippentenarms freigesetzt wird.

## Revendications

1. Unité de support de réactif qui est une plaque de récipients ou une microplaque ayant une pluralité de récipients de réaction comprenant
une section de couplage pour un couplage détachable avec une section de couplage de bras de pipetage (18) d'un moyen de pipetage d'un robot de laboratoire (1) pour un couplage d'une pointe de pipette,
dans lequel la section de couplage est un évidement (36) en pointe ayant une intérieure de forme complémentaire par rapport à la surface extérieure de la section de couplage de bras de pipetage (18) pour fixer l'unité de support de réactif à la section de couplage de bras de pipetage (18) par force de friction et / ou par les moyens d'un vide appliqué par le bras de pipetage,
dans lequel l'évidement (36) est un trou borgne spécial de l'unité de support de réactif, qui est différent comparé au récipient de réaction.

2. Unité de support de réactif selon la revendication 1, dans laquelle l'unité de support de réactif comprend un adaptateur (38) pour saisir des unités de support de réactif comprenant une section de couplage supérieure (39) pour un couplage détachable de l'adaptateur (38) avec un moyen de pipetage d'un robot de laboratoire (1) et une section de couplage inférieure (40) pour un couplage détachable de l'adaptateur (38) avec une unité de support de réactif.

3. Unité de support de réactif selon la revendication 2, dans laquelle la section de couplage inférieure (40) a une surface extérieure de forme complémentaire par rapport à une surface intérieure d'une unité de support de réactif qui doit être saisie, de sorte que, en insérant le moyen de couplage inférieur dans l'unité de support de réactif, l'unité de support de réactif est saisie par une force de friction.

4. Unité de support de réactif selon la revendication 2 ou 3, dans laquelle la section de couplage inférieure (40) comprend une pince élastique (44) qui est réalisée pour saisir une unité de support de réactif en enclenchant la partie supérieure de l'unité de support de réactif.

5. Unité de support de réactif selon l'une quelconque des revendications 2 à 4, dans laquelle
la section de couplage supérieure (39) comprend un évidement (36) ayant une surface intérieure formée complémentaire par rapport à une surface extérieure d'une section de couplage de bras de pipetage (18).

6. Unité de support de réactif selon l'une quelconque des revendications 2 à 5, dans laquelle la section de couplage supérieure (39) comprend un trou borgne (56), de préférence un trou borgne de forme conique.

7. Unité de support de réactif selon l'une quelconque des revendications 2 à 6, dans laquelle la section de couplage supérieure (39) peut être couplée de manière détachable à une pointe de pipette (19, 55), de préférence en plaçant la pointe de pipette (19, 55) dans le trou borgne (56).

8. Unité de support de réactif selon l'une quelconque des revendications 2 à 6, dans laquelle l'unité de support de réactif est une plaque de gel.

9. Procédé de manipulation d'une unité de support de réactif selon l'une quelconque des revendications 1 à 8 à l'aide d'un robot de pipetage comprenant un bras de pipetage mobile comportant une section de couplage de bras de pipetage (18) pour coupler de manière détachable une pointe de pipetage (19, 55), et la section de couplage (18) du bras de pipetage est utilisée pour saisir l'unité de support de réactif, de sorte que l'unité de support de réactif puisse être déplacée en déplaçant le bras de pipetage,
dans lequel l'unité de support de réactif est une plaque de récipients ou une microplaque ayant une pluralité de récipients de réaction, et dans lequel l'évidement (36) est un trou borgne spécial de l'unité de support de réactif, qui est différent comparé au récipient de réaction.

10. Procédé de manipulation d'une unité de support de réactif selon la revendication 9, dans lequel l'unité de support de réactif est déplacée vers un lieu cible et est libérée à l'endroit cible, dans lequel la libération au lieu cible peut être effectuée par l'une des étapes suivantes
- placement de l'unité de support de réactif en dessous d'une butée, de sorte que, en déplaçant vers le haut du bras de pipetage, l'unité de support de réactif est libérée du bras de pipetage,
- en réduisant un vide pour le maintien de l'unité de support de réactif, ou
- en retirant.

11. Procédé de manipulation d'une unité de support de réactif selon la revendication 9 ou 10, dans lequel l'unité de support de réactif est saisie et / ou libérée par des forces de frottement.

12. Procédé de manipulation d'une unité de support de réactif selon l'une quelconque des revendications 10 à 12, dans lequel
l'unité de support de réactif est saisie par aspiration au moyen du bras de pipette, et / ou dans lequel l'unité de support de réactif est libérée en soufflant de l'air à partir du bras de pipette au moyen du bras de pipette.
